# EUROPÄISCHE PATENTSCHRIFT

(11) **EP 1 640 696 B1**
(45) Veröffentlichungstag und Bekanntmachung des Hinweises auf die Patenterteilung: **09.06.2010**
(21) Anmeldenummer: 04022866.0
(22) Anmeldetag: 24.09.2004
(51) Int. Cl.: G01L 9/06, G01L 9/00, G01L 13/02, G01L 19/06

(54) **Drucksensor**
Pressure sensor
Capteur de pression

(43) Veröffentlichungstag der Anmeldung: 29.03.2006
(73) Patentinhaber: GRUNDFOS A/S, DK-8850 Bjerringbro (DK)
(72) Erfinder: Krog, Jens Peter, Torup 8860 Ulstrup (DK); Pedersen, Casper, 2100 Koobenhavn (DK); Christensen, Carsten, 2880 Bagsvaerd (DK)
(74) Vertreter: Vollmann, Heiko

(56) Entgegenhaltungen:
- DE-A1- 19 701 055
- PATENT ABSTRACTS OF JAPAN Bd. 013, Nr. 216 (E-760), 19. Mai 1989 (1989-05-19) -& JP 01 027275 A (TOSHIBA CORP), 30. Januar 1989 (1989-01-30)

## Beschreibung

Die Erfindung betrifft einen Drucksensor, insbesondere einen Differenzdrucksensor.

Ein solcher Drucksensor ist beispielsweise aus EP 0 083 496 B1, JP 01027275 sowie DE 197 01 055 A1 oder auch der europäischen Patentanmeldung 03 015 055 bekannt. Diese Differenzdrucksensoren sind aus einem Halbleitersubstrat gebildet, dass in einem inneren Bereich zu einer Membran ausgedünnt ist. In diesem inneren Bereich sind vier Messwiderstände angeordnet, welche zu einer Messbrücke verschaltet sind, so dass über die Verformung der Membran der zu beiden Seiten der Membran anliegende Druck als Differenzdruck ermittelt werden kann.

Aus dem genannten Stand der Technik ist es ferner bekannt, zusätzliche Kompensationswiderstände an dem die Membran als Träger umgebenden Halbleitersubstrat, welches sich unter Einwirkung des Differenzdruckes nicht verformt, anzuordnen, um temperaturbedingte Einflüsse sowie Einflüsse des an beiden Seiten der Membran anliegenden Systemdruckes, welcher am Umfang der Membran auf die Stirnseiten des Trägers wirkt, zu eliminieren.

Dieser Aufbau weist jedoch Nachteile auf. So müssen die Kompensationswiderstände auf dem Substrat möglichst weit entfernt von der Membran angeordnet werden, um Einflüsse des auf die Membran wirkenden Differenzdruckes auf die Kompensationswiderstände auszuschließen. Dies vergrößert den Aufbau des Drucksensors. Da die Kompensationswiderstände keinem Einfluss des Differenzdruckes unterliegen erhöhen sie, wenn sie mit den Messwiderständen auf der Membran verschaltet sind, rein passiv den Gesamtwiderstand der Schaltung, wodurch die Messgenauigkeit zur Messung des Differenzdruckes verschlechtert wird.

Es ist daher Aufgabe der Erfindung, einen verbesserten Drucksensor mit erhöhter Messgenauigkeit und kleinerem Aufbau zu schaffen. Diese Aufgabe wird durch einen Drucksensor mit den im Anspruch 1 angegebenen Merkmalen gelöst. Bevorzugte Ausführungsformen ergeben sich aus den Unteransprüchen, der Beschreibung und den Figuren.

Der erfindungsgemäße Drucksensor weist einen Träger auf, welcher beispielsweise aus einem Halbleitersubstrat besteht, und, in dessem inneren Bereich eine Membran ausgebildet ist. Diese Membran kann in bekannter Weise durch Ausdünnen des Halbleitersubstrats im Mittelbereich einstückig mit dem Träger gebildet sein. An der Membran, ist ein erstes Messelement zum Erfassen einer Verformung durch Druckbeaufschlagung der Membran angeordnet. Das Messelement kann beispielsweise ein Messwiderstand sein, welcher piezoresistiv arbeitet. Solche Messwiderstände können in bekannter Weise durch Dotieren des Halbleitermaterials in der Membran selber ausgebildet werden, um Spannungen bzw. Dehnungen in der Membran zu erfassen. Als Halbleitersubstrat kann beispielsweise ein Silizium-Einkristall mit Oberflächen im <100>-Niveau Verwendung finden. Die Messwiderstände bzw. Dehnungsaufnehmer, werden vorzugsweise n-dotiert in der Membran ausgebildet. Alternativ kann in bekannter Weise ein auf Dehnung reagierendes Messelement auf die Oberfläche der Membran aufgebracht werden. Dazu kann beispielsweise ein Dehnungsmessstreifen aus Polysilizium Verwendung finden. Erfindungsgemäß ist neben dem ersten Messelement zumindest ein zweites Messelement vorgesehen, welches ebenfalls auf oder in der Membran angeordnet ist. Dieses Messelement kann entsprechend dem ersten Messelement im Halbleitermaterial der Membran selber ausgebildet sein oder als Messelement auf der Membranoberfläche angeordnet sein. Auch dieses Messelement ist so angeordnet, dass es zum Erfassen einer Druckbeaufschlagung der Membran dient. Bei Druckbeaufschlagung verformt sich die Membran, was durch das erste und zweite Messelement in Form von Dehnungen oder Änderungen von Spannungen in der Membran bzw. an der Membranoberfläche erfasst werden kann.

Erfindungsgemäß sind das erste und das zweite Messelement so an der Membran angeordnet, dass das erste Messelement und das zweite Messelement unterschiedlich weit vom Rand der Membran beabstandet sind. Das heißt, das eine Messelement liegt näher am Rand der Membran, während das andere Messelement näher zum Zentrum der Membran gelegen ist. Die Ausgangssignale des ersten und des zweiten Messelementes, beispielsweise Widerstandsänderungen des ersten und des zweiten Messelementes werden derart gemeinsam ausgewertet, dass die beiden Messelemente gemeinsam einen auf die Membran wirkenden Differenzdruck, d.h. die Druckdifferenz zwischen den an beiden Membranoberflächen anliegenden Drücken, erfassen und dabei gleichzeitig den Einfluss des auf beide Seiten bzw. Oberflächen der Membran wirkenden Systemdruckes kompensieren. Eine Druckdifferenz zwischen den beiden Seiten bzw. den beiden entgegengesetzten Oberflächen der Membran führt zu einer Auslenkung der Membran zu einer Seite hin, was durch die beiden Messelemente in Form von Dehnungsänderungen oder Spannungsänderungen erfasst werden kann. Wenn ein solcher Drucksensor in einem System, beispielsweise einem hydraulischen System angeordnet ist, wirkt ferner auf beide Seiten der Membran und den umgebenden Träger ein Systemdruck, welcher das Messergebnis verfälschen kann. Durch die erfindungsgemäße Anordnung von erstem und zweitem Messelement und Auswertung deren Ausgangssignale kann der Einfluss des Systemdruckes kompensiert werden.

Diese Kompensation basiert auf der Erkenntnis, dass der auf die Membran wirkende Differenzdruck im Randbereich der Membran und im Mittel- bzw. Zentralbereich der Membran Spannungen bzw. Spannungsänderungen mit unterschiedlichen Vorzeichen und im Wesentlichen gleichen Amplituden erzeugt. Der Einfluss des Systemdruckes, welcher auf beide Seiten der Membran gleich und auf die Stirnseiten des Trägers am Umfang der Membran wirkt, verursacht jedoch Spannungen bzw. Spannungsänderungen im Zentral- und Randbereich der Membran, welche sowohl Amplituden von im Wesentlichen gleicher Größer aufweisen und gleiche Vorzeichen. Zwischen dem Zentral- und Randbereich gibt es einen neutralen Bereich, in welchem keine Spannungen bzw. Verformungen aufgrund des Einflusses des Differenzdruckes erfassbar sind. Diese unterschiedlichen Einflüsse von Differenz- und Systemdruck auf die Verformung bzw. auftretenden Spannungen der Membran ermöglicht es, durch entsprechende Anordnung der Messelemente auf der Membran und entsprechende Auswertung bzw. Verschaltung der Ausgangssignale der Messelemente den Einfluss des Systemdruckes auf die Differenzdruckmessung zu kompensieren. Dazu werden die zwei Messelemente in den unterschiedlich auf die Drücke reagieren Bereichen der Membran, d. h. unterschiedlich weit beabstandet vom Rand der Membran angeordnet.

Erfindungsgemäß kann somit auf die auf dem Substrat angeordnete Kompensationswiderstände verzichtet werden. Dies ermöglicht zum einen, den Drucksensor kleiner auszubilden, da das Substrat, bzw. der Träger nicht so groß ausgebildet werden muss, dass die Kompensationswiderstände ausreichend weit von der Membran angeordnet werden können. Ferner hat die erfindungsgemäße Anordnung den Vorteil, dass sowohl das erste als auch das zweite Messelement auf die Auslenkungen der Membran aufgrund der Änderungen des Differenzdruckes reagieren. Das bedeutet, beide Messelemente sind aktiv an der Messung des Differenzdruckes beteiligt. Es gibt keine Kompensationswiderstände mehr, welche lediglich zur Kompensation des Systemdruckes vorgesehen sind, aber nicht auf den Differenzdruck reagieren. Auf diese Weise wird bei der Differenzdruckmessung der passive Widerstand in der Schaltung reduziert, so dass eine höhere Messgenauigkeit erreicht wird.

Vorteilhafterweise ist das zumindest eine erste Messelement in einem Randbereich der Membran und das zumindest eine zweite Messelement in einem Zentralbereich oder in einem zwischen dem Rand- und dem Zentralbereich gelegenen Neutralbereich der Membran angeordnet. Alternativ kann in einer weiteren bevorzugten Anordnung das zumindest eine zweite Messelement in einem Zentralbereich der Membran und das zumindest eine erste Messelement in einem Randbereich oder in einem zwischen dem Randbereich und dem Zentralbereich gelegenen Neutralbereich der Membran angeordnet sein. Diese Anordnung gewährleistet, dass die ersten und zweiten Messelemente so auf der Membran verteilt sind, dass der Einfluss des Systemdruckes auf die Ausgangssignale der beiden Messelemente unterschiedlich ist. In dem Fall das das erste Messelement oder die ersten Messelemente im Randbereich der Membran und das zweite Messelement oder die zweiten Messelemente im Zentralbereich der Membran angeordnet sind, haben die durch den Systemdruck auftretenden Spannungen bzw. Spannungsänderungen, welche von den ersten und zweiten Messelementen erfasst werden, gleiche Vorzeichen, während die Spannungsänderungen aufgrund des Differenzdruckes bei beiden Messelementen bzw. beiden Gruppen von Messelementen unterschiedliche Vorzeichen haben. Wenn eines der Messelemente im Neutralbereich angeordnet ist, hat der Differenzdruck überhaupt keinen Einfluss auf dieses Messelement, während er einen Einfluss auf das andere Messelement oder die andere Gruppe von Messelementen, welche außerhalb des Neutralbereichs angeordnet sind, hat. Allerdings hat der Systemdruck, welcher auf die Membran wirkt auch einen Einfluss auf das Messelement im Neutralbereich der Membran. Durch entsprechende Verschaltung der Ausgangssignale der ersten und zweiten Messelemente bzw. durch entsprechende Auswertung der Ausgangssignale ist es somit möglich, den Differenzdruck und den Systemdruck zu erfassen bzw. den Einfluss des Systemsdruckes auf den erfassten Differenzdruck zwischen beiden Seiten der Membran zu kompensieren.

Vorteilhafterweise sind jeweils vier erste Messelemente und vier zweite Messelemente an der Membran angeordnet, welche in einer Brückenschaltung miteinander verschaltet sind. Dies bedeutet, dass jeweils die vier ersten Messelemente und die vier zweiten Messelemente in einer vorzugsweise gemeinsamen Brückenschaltung miteinander verschaltet sind.

Die vier ersten und die vier zweiten Messelemente sind dabei vorzugsweise jeweils so ausgebildet oder angeordnet, dass zwei von ihnen ein Ausgangssignal mit positiven Vorzeichen und zwei von ihnen ein Ausgangssignal mit negativen Vorzeichen haben. Dies bedeutet, zwei erste Messelemente haben ein Ausgangssignal mit positivem Vorzeichen und zwei zweite Messelemente haben ein Ausgangssignal mit negativen Vorzeichen. Entsprechend könnten zwei zweite Messelemente ein Ausgangssignal mit positiven Vorzeichen und die zwei anderen zweiten Messelemente ein Ausgangssignal mit negativen Vorzeichen haben. Diese Anordnung ermöglicht eine einfache gemeinsame Auswertung der Ausgangssignale von ersten und zweiten Messelementen. So können in einer Brückenschaltung, in welcher die ersten bzw. zweiten Messelemente miteinander verschaltet sind, beispielsweise in einer Wheatstone-Brückenschaltung, die Ausgangssignale mit negativen Vorzeichen sehr leicht von den Ausgangssignalen mit positiven Vorzeichen subtrahiert werden. Auf eine aufwändige Auswerteelektronik, welche diese Rechenoperationen durchführt verzichtet werden, vielmehr können die erforderlichen Additionen und Subtraktionen sehr leicht in einer einfachen Brückschaltung realisiert werden, in der beispielsweise entsprechend die Widerstandänderungen der Messelemente aufgrund ihrer unterschiedlichen Vorzeichen voneinander subtrahiert werden.

Die Ausgangssignale mit unterschiedlichen Vorzeichen können entweder durch verschiedene Ausgestaltung oder unterschiedliche Anordnung der Messelemente erreicht werden. Bei piezoresistiven Messelementen, welche durch Dotieren des Halbleitermaterials der Membran in dieser erzeugt werden, kann beispielsweise eine Vorzeichenänderung des Ausgangssignals dadurch erreicht werden, dass zwei Messelemente um 90° gedreht in der Ebene der Membran zu den beiden anderen Messelementen angeordnet werden. Die durch Dotierung erzeugten Messelemente erfassen immer einen Gesamtspannungszustand an der jeweiligen Membranstelle. Das heißt auch die um 90° gedrehten Messelemente erfassen denselben Gesamtspannungszustand wie die anderen Messelemente, nur weist deren Ausgangssignal ein umgekehrtes Vorzeichen auf. Bei Verwendung von Dehnungsmesselementen, welche auf die Membranoberfläche aufgebracht, beispielsweise aufgeklebt werden ist es möglich unterschiedliche Dehnungsmesselemente zu verwenden, nämlich zwei Dehnungsmesselemente, welche bei Dehnung einen Ausgangssignal mit positiven Vorzeichen aufweisen, und zwei Messelemente, welche bei Stauchung ein Ausgangssignal mit positiven Vorzeichen aufweisen. Wenn diese Dehnungsmesselemente in derselben Richtung, d. h. entlang derselben Achse der Membran angeordnet werden, erfassen sie die gleichen Dehnungsänderungen der Membran in dieser Richtung, jedoch wird das Messelement, welches bei Stauchung ein positives Ausgangssignal abgibt ein Ausgangssignal mit umgekehrten Vorzeichen aufweisen als das Messelement, welches bei Dehnung ein positives Vorzeichen aufweist.

Weiter bevorzugt ist die Membran so ausgestaltet, dass Sie entlang einer ersten Achse ein anderes Verformungsverhalten bei Druckbeaufschlagung aufweist als entlang einer zweiten, sich normal zu der ersten Achse erstreckenden Achse. Diese Anordnung ist vorteilhaft bei der Verwendung von bidirektionalen Messelementen, d. h. von Messelementen, welche einen Gesamtspannungszustand in beiden Achsrichtungen der Membranebene erfassen. Durch die Ausgestaltung in der Weise, dass die Membran entlang ihrer beiden zueinander normalen Achsen unterschiedliche Verformungsverhalten aufweist, wird insbesondere erreicht, dass der Einfluss des Systemdruckes auf die Verformung bzw. Spannungen der Membran entlang der beiden Achsen unterschiedlich ist. Der Systemdruck, welcher auf beide Membranoberflächen normal zur Membranoberfläche wirkt, hat keinen direkten Einfluss auf das Messergebnis des Differenzdruckes, da dieser Druck auf beide Oberflächen der Membran in gleicher Weise wirkt. Der Systemdruck hat im Wesentlichen nur daher einen Einfluss auf das Messergebnis, dass er auf die Stirnflächen des Trägers bzw. Substrat am Rand der Membran in einer Richtung parallel zur Membranoberfläche wirkt. Wenn nun die Membran so ausgebildet wird, das sie entlang der beiden Achsen ein unterschiedliches Verformungsverhalten aufweist, führen die auf die Kanten des Substrats wirkenden Kräfte, welche auf die Membran in Richtung parallel zu deren Oberfläche wirken, aufgrund der unterschiedlich langen Kanten zu unterschiedlichen Spannungen entlang der beiden zueinander normalen Achsen der Membranfläche. Vorteilhafterweise sind die Spannungen bzw. Kräfte in der einen Richtung erheblich größer als in der anderen Richtung, so dass die geringeren Kräfte vernachlässigt werden können. Dies ermöglicht, dass auch mit bidirektionalen Messelementen in der Mitte bzw. im Zentralbereich der Membran Spannungsänderungen aufgrund des Systemdruckes erfasst werden können. Auch wenn die vorangehend beschriebene Ausgestaltung der Membran besonders bei Verwendung von bidirektionalen Messelementen von Vorteil ist, kann sie auch bei Verwendung von unidirektionalen Messelementen zur Anwendung kommen.

Die ersten und zweiten Messelemente sind vorteilhafter Weise in einer gemeinsamen Brückenschaltung, beispielsweise einer Wheatstone-Brückenschaltung miteinander verschaltet. Dies hat den Vorteil, dass der Sensor nur ein Ausgangssignal, welches proportional zu dem zu erfassenden Differenzdruck ist, ausgibt. Dieses Ausgangssignal ist bereits um den Einfluss des auf beide Seiten der Membran wirkenden Systemdruckes korrigiert. Es ist somit nicht erforderlich, unabhängig voneinander den Differenzdruck und den Systemdruck zu bestimmen und anschließend die beiden entsprechenden Signale so zu verarbeiten, dass der Einfluss des Systemdruckes auf den erfassten Differenzdruckwert kompensiert wird. Allerdings ist es auch möglich, bei der erfindungsgemäßen Ausgestaltung in der gemeinsamen Verschaltung von ersten und zweiten Messelementen Anschlusspunkte vorzusehen, an welchen ein Signal, welches proportional zu dem Systemdruck ist, abgegriffen werden kann, um auch den Systemdruck zahlenmäßig bestimmen zu können.

Besonders bevorzugt sind die ersten und zweiten Messelemente in einer Wheatstone-Brückenschaltung miteinander verschaltet, wobei in jedem Zweig der Brückenschaltung jeweils eines der ersten und eines des zweiten Messelemente in Reihe geschaltet angeordnet sind. Auf diese Weise addieren sich die Ausgangswerte der ersten und zweiten Messelemente in jedem Zweig der Brückenschaltung. Im Falle von Messwiderständen addieren sich somit beispielsweise die Widerstände von erstem und zweitem Messelement in jedem Zweig der Brückenschaltung.

Bevorzugt sind in jedem Zweig der Brückenschaltung zwei Messelemente in Reihe geschaltet, welche Ausgangssignale mit unterschiedlichen Vorzeichen haben. Dies ermöglicht in dem Zweig der Brückenschaltung die Ausgangssignale der in Reihe geschalteten Messelemente zu subtrahieren.

Vorzugsweise sind die Messelemente in einem Bereich bzw. in Bereichen der Membran angeordnet, in welchen bei Druckbeaufschlagung die größte Verformung auftritt. Wie oben ausgeführt, kann die Membran so ausgeführt sein, dass sie unterschiedliche Dehnungs- bzw. Verformungsverhalten entlang zweier zueinander normaler Achsen aufweist. In diesem Fall werden die Messelemente beispielsweise entlang einer Zone angeordnet, in welcher das stärkste Verformungsverhalten der Membran bei Druckbeaufschlagung auftritt. Auf diese Weise wird die Sensibilität und Messgenauigkeit des Drucksensors erhöht. Ferner werden die Messelemente auch im Randbereich der Membran dort angeordnet, wo die größten Verformungen bzw. Spannungen bei Druckbeaufschlagung der Membran auftreten.

Ein unterschiedliches Verformungs- bzw. Dehnungsverhalten der Membran bei Druckbeaufschlagung entlang der zwei zueinander normalen Achsen kann beispielsweise dadurch erreicht werden, dass die Membran in Richtung der zweiten Achse eine größere Länge aufweist als in Richtung der ersten, zu der zweiten Achse normalen Achse. Eine solche, länglich ausgebildete Membran, welche in dem Träger fest eingespannt ist, weist bei Druckbeaufschlagung ein solches Verformungsverhalten auf, dass die Spannungen in Richtung der ersten, d.h. kurzen Achse größer sind als in Richtung der zweiten, d.h. langen Achse. Insbesondere der Einfluss des Systemdruckes, welcher auf die Kanten des Trägers bzw. des Substrates wirkt, führt somit zu unterschiedlichen Spannungen bzw. Dehnungen entlang der beiden Achsen der Membran. Die Messelemente werden vorzugsweise in Richtung der kurzen Achse angeordnet und gegebenenfalls so ausgerichtet, dass sie die Spannungs- bzw. Dehnungsänderungen in Richtung der kurzen Achse erfassen.

Eine solche Membran mit unterschiedlichen Achslängen kann beispielsweise rechteckig oder auch elliptisch oder in anderer Form mit unterschiedlichen Achslängen ausgebildet sein.

Bevorzugt liegt das Längenverhältnis der beiden Längen der Membran in Richtung der zweiten und ersten Achse zwischen 1,2 und 4, besonders bevorzugt etwa bei 2,5. Bei diesen Längenverhältnissen wird erreicht, dass die bei Druckbeaufschlagung auftretenden Spannungen in Richtung der ersten, d.h. kürzen Achse deutlich größer als in Richtung der langen Achse sind.

Die ersten und zweiten Messelemente sind zweckmäßigerweise in Richtung der zweiten Achse gesehen im Mittelbereich der Membran angeordnet. Bei einer Membran mit unterschiedlichen Länge in Richtung der zwei zueinander normalen Achsen, ist die zweite Achse diejenige Achse, welche die größere Länge aufweist. Das bedeutet, dass die Messelemente in einer Zone angeordnet sind, welche im Wesentlichen im Mittelbereich der langen Achse gelegen ist und sich in Richtung der kurzen Achse von einer Seite der Membran zur entgegengesetzten Seite der Membran erstreckt. Dies ist der Bereich, in welchem die größten Spannungen bzw. Verformungen bei Druckbeaufschlagung der Membran auftreten.

Die Membran ist besonders bevorzugt rechteckig mit zwei unterschiedlich langen Seiten bzw. Achsen ausgebildet, wodurch erreicht wird, dass im Mittelbereich der langen Achse, in welchem vorzugsweise die Messelemente angeordnet sind, gleichmäßige Spannungen bzw. Spannungsänderungen bei Druckbeaufschlagung herrschen, welche von allen Messelementen erfasst werden. Bei Verwendung eines Halbleitersubstrates als Material für die Membran, wie es oben beschrieben wurde, ist die rechteckig mit unterschiedlichen Kantenlängen ausgebildete Membran vorzugsweise so angeordnet, dass sich ihre Kanten in <110> - Richtung erstrecken.

Eine weitere Möglichkeit, eine Membran mit unterschiedlichem Verformungsverhalten in Richtung zweier zueinander normaler Achsen auszubilden, ist, die Membran in verschiedenen Bereichen unterschiedlich dick auszubilden, so dass sie in verschiedenen Richtungen verschiedene Verformungsverhalten aufweist. Dabei wird die Membran vorzugsweise ebenfalls so ausgebildet, dass in Richtung einer ersten Achse bei Druckbeaufschlagung größere Spannungen in der Membran entstehen als in Richtung einer zweiten zu der ersten Achse normalen Achse. Die Anordnung der Messelemente erfolgt dann zweckmäßigerweise, wie oben bereits beschrieben, in Richtung der Achse, in der die stärkste Verformung bzw. Spannung bei Druckbeaufschlagung, insbesondere durch Einwirkung des Systemsdruckes auftritt.

Nachfolgend wird die Erfindung beispielhaft anhand der beigefügten Figuren beschrieben. In diesen zeigt:
- Fig. 1: eine schematische Draufsicht auf einen erfindungsgemäß ausgebildeten Drucksensor gemäß einer ersten Ausführungsform,
- Fig. 2: eine schematische Draufsicht auf einen erfindungsgemäß ausgebildeten Drucksensor gemäß einer zweiten Ausführungsform,
- Fig. 3: eine schematische Draufsicht auf einen erfindungsgemäß ausgebildeten Drucksensor gemäß einer dritten Ausführungsform,
- Fig. 4: eine schematische Draufsicht auf einen erfindungsgemäß ausgebildeten Drucksensor gemäß einer vierten Ausführungsform,
- Fig. 5: eine schematische Draufsicht auf einen erfindungsgemäß ausgebildeten Drucksensor gemäß einer fünften Ausführungsform,
- Fig. 6: eine schematische Draufsicht auf einen erfindungsgemäß ausgebildeten Drucksensor gemäß einer sechsten Ausführungsform,
- Fig. 7: schematisch die Verschaltung der Messelemente des Drucksensors gemäß Fig. 1 bis 6,
- Fig. 8: den Spannungsverlauf in der Membran aufgrund des auf die Membran wirkenden Differenzdruckes,
- Fig.9: den Spannungsverlauf in der Membran aufgrund eines auf beide Seiten der Membran wirkenden Systemdruckes und
- Fig. 10: schematisch die Spannungen aufgrund des Systemsdruckes an drei Positionen der Membran,
- Fig. 11: schematisch die Spannungen aufgrund des Differenzdruckes an drei Stellen der Membran,
- Fig. 12: schematisch die Spannungen aufgrund des Systemdruckes und aufgrund des Differenzdruckes an drei Stellen der Membran,
- Fig. 13: schematisch ein kombiniertes Signal und
- Fig. 14: eine schematische Draufsicht auf einen Drucksensor ähnlich dem in Fig. 1 und 4 gezeigten Drucksensor, bei welchem zusätzliche Anschlüsse zum Auslesen des Systemdruckes vorgesehen sind.

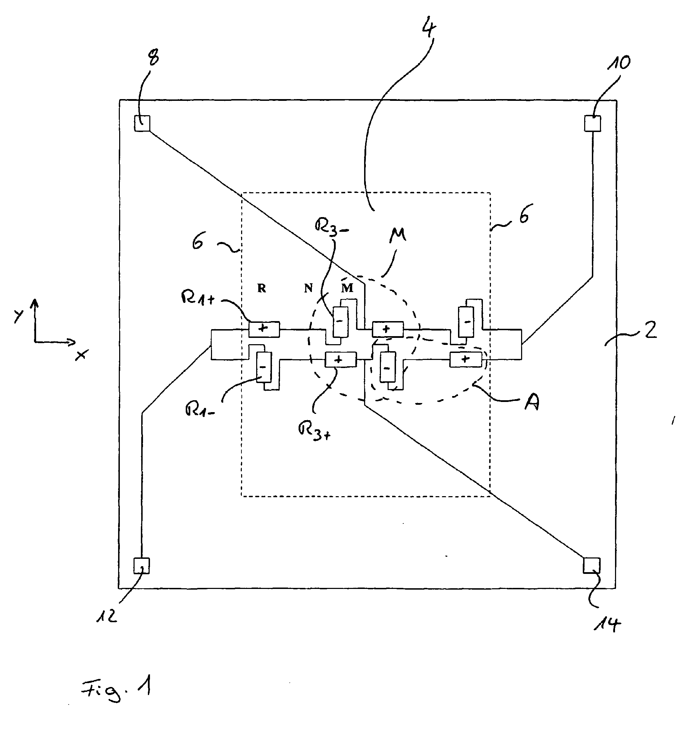

Der anhand der Figuren erläuterte Drucksensor gemäß der Erfindung weist einen Träger, bzw. ein Substrat 2 aus einem Halbleitermaterial auf, in dessen Mittelbereich durch Ausdünnen einstückig mit dem Träger 2 eine rechteckige Membran 4 ausgebildet ist. Die Membran ist so ausgebildet, dass sie in Richtung der Achse y eine größere Kantenlänge aufweist als in Richtung der Achse x. Die Membran 4 ist in bekannter Weise von beiden Oberflächen her mit einem Druck beaufschlagbar, um den Differenzdruck zwischen den beiden an den entgegengesetzten Oberflächen der Membran anliegenden Drücken aufgrund der Auslenkung der Membran bestimmen zu können. Dazu sind auf der Membran acht Messelemente in Form von Messwiderständen angeordnet. Die Messwiderstände sind bei den Ausführungsbeispielen gemäß Fig. 1 bis 3 durch Dotierung des Halbleitermaterials als piezoresistive Elemente direkt in der Membranoberfläche ausgebildet. Vier Messwiderstände R₁ sind näher zu den zwei einander gegenüberliegenden langen Seiten 6 angeordnet. Vier weitere, zweite Messwiderstände R₃ sind weiter beabstandet von dem Kanten bzw. Rändern der Membran 4 angeordnet. Alle acht Messwiderstände R₁ und R₃ sind entlang eines Streifens in Richtung der kurzen Achse x der Membran in etwa in der Mitte der langen Seiten 6 angeordnet. Dies ist bei der gezeigten rechteckigen Membran mit unterschiedlich langen Seitenkanten der Bereich, in welchem bei Druckbeauschlagung die größten Spannungen auftreten. Die Spannungen in Richtung der Achse y sind deutlich geringer. Bei den Ausführungsbeispielen gemäß Fig. 1 bis 6 sind jeweils vier Messwiderstände R₁ und Messwiderstände R₃ vorgesehen, von denen jeweils zwei R₁₋ und R₃₋ ein Ausgangssignal mit einem negativen Vorzeichen und die zwei anderen R₁₊ und R₃₊ ein Ausgangssignal mit einem positiven Vorzeichen haben. Dies bedeutet bei den Messelementen in Form von Messwiderständen, dass sich bei einer Spannungsänderung der Widerstand der Messwiderstände mit negativen Ausgangssignal verringert, während er sich bei den Messwiderständen mit positivem Ausgangssignal erhöht. Bei den in Fig. 1 bis 3 gezeigten Messwiderständen handelt es sich, wie oben ausgeführt, um piezoresistive Messelemente, welche durch Dotierung in dem Halbleitersubstrat der Membran 4, beispielsweise ein Silizium-Einkristall mit Oberflächen im 100-Niveau, erzeugt sind, wobei die Messelemente bzw. Dehnungsaufnehmer R₁ und R₃ n-dotiert sind. Bei diesen dotierten Messaufnehmern wird das unterschiedliche Vorzeichen des Ausgangssignals dadurch erreicht, dass die Messelemente um 90 ° zueinander gedreht in der Membranoberfläche ausgerichtet sind. Dies in den Fig. 1 bis 3 dargestellt, in denen die Messelemente R₁₋ und R₃₋ in Richtung der y-Achse und die Messelemente R₁₊ und R₃₊ in Richtung der x-Achse ausgerichtet sind. Die dotierten Messaufnehmer, wie sie bei den Ausführungsbeispielen gemäß Fig. 1 bis 3 verwendet werden, messen immer einen Gesamtspannungszustand in Richtung der x- und der y-Achse. Daher ist es bei diesen Messaufnehmern vorteilhaft, die Membran in der beschriebenen rechteckigen Weise mit zwei unterschiedlich langen Seitenkanten auszubilden, so dass die in Richtung der x-Achse auf die Messelemente wirkenden Spannungen größer als die in Richtung der y-Achse wirkenden Spannungen sind.

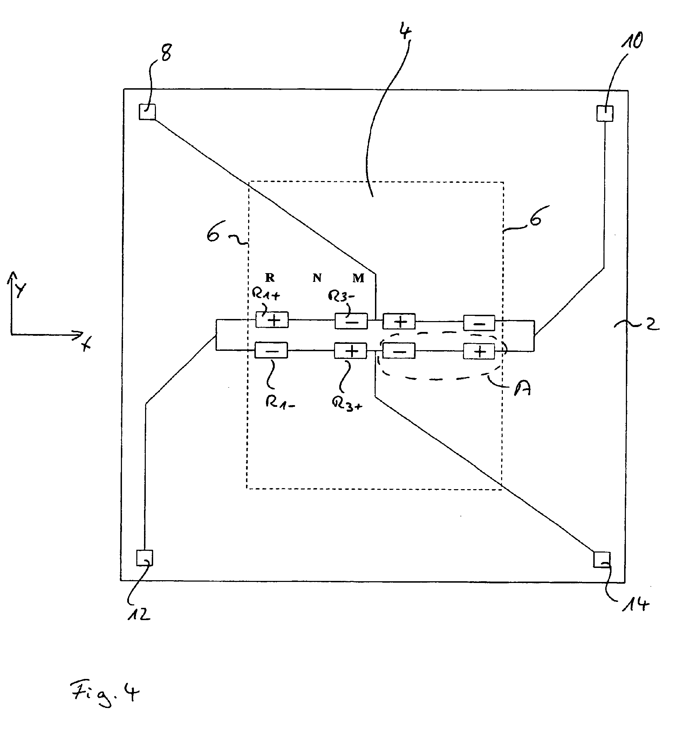

Bei den Ausführungsbeispielen gemäß Fig. 4 bis 6 werden auf die Membranoberfläche aufgebrachte Dehnungsmessstreifen, beispielsweise aus Polysilizium, verwendet. Bei diesen Dehnungsmessstreifen kann der Vorzeichenwechsel dadurch erreicht werden, dass einmal Dehnungsmessstreifen verwendet werden, welche bei Dehnung ihren Messwiderstand vergrößern und als zweite Dehnungsmessstreifen solche verwendet werden, welche bei Dehnung ihren Messwiderstand verringern, d. h. bei Stauchung ihren Messwiderstand vergrößern würden. Auf diese Weise kann auch mit Dehnungsmessstreifen eine Anordnung, wie sie in den Fig. 4 bis 6 gezeigt ist, realisiert werden, bei welcher Messwiderstände R₁₋ und R₃₋, welche bei Dehnung ein negatives Ausgangssignal haben, und Messwiderstände R₁₊ und R₃₊, welche bei Dehnung ein positives Ausgangssignal haben, verwendet werden.

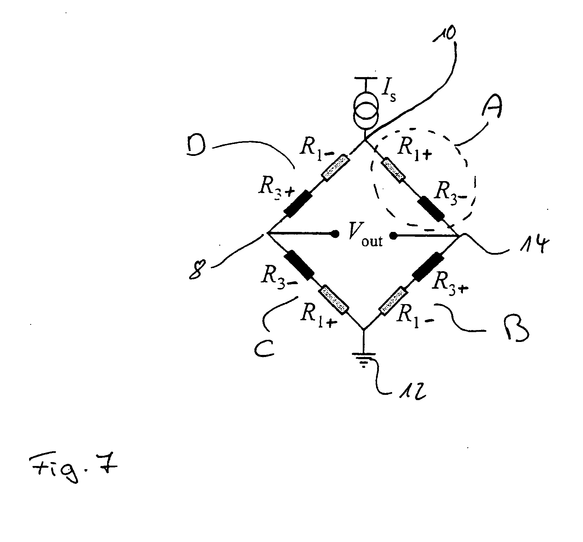

Die Anordnung bzw. die Ausgestaltung der Messwiderstände R₁ und R₃ mit unterschiedlichen Vorzeichen hat den Zweck, dass in einer Schaltung die Signale der einzelnen Messwiderstände voneinander subtrahiert werden können. Das heißt die Verrechnung der Ausgangssignale der einzelnen Messwiderstände R₁ und R₃ kann in einer einfachen Brückenschaltung realisiert werden. Dabei ist es, wie anhand von Fig. 7 erläutert werden wird, wichtig, dass in jedem Zweig der Brückenschaltung ein Messwiderstand mit positiven Ausgangssignal und ein Messwiderstand mit negativen Ausgangssignal angeordnet ist. Dabei kann die Zuordnung von positiven und negativen Ausgangssignalen bei den Messwiderständen R₁ und R₃ auch umgekehrt zu den in Fig. 1 bis 6 gezeigten Beispielen sein.

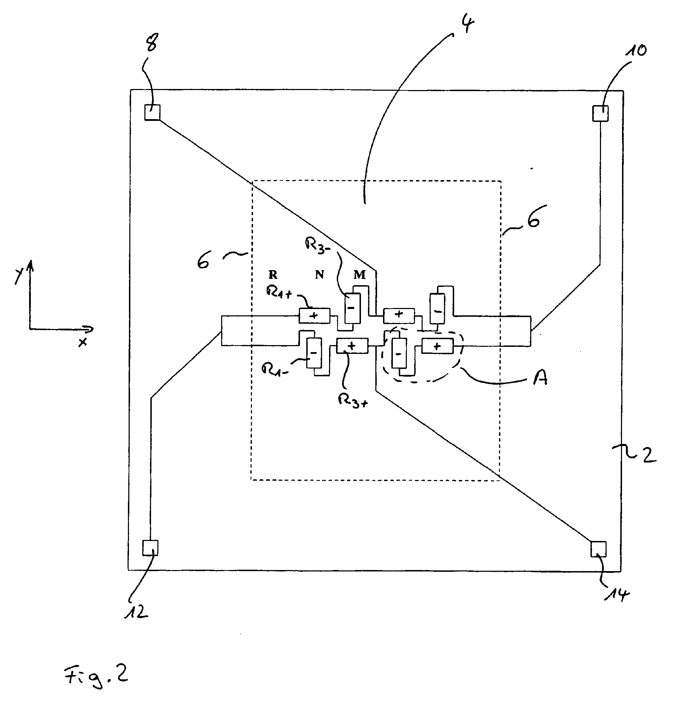

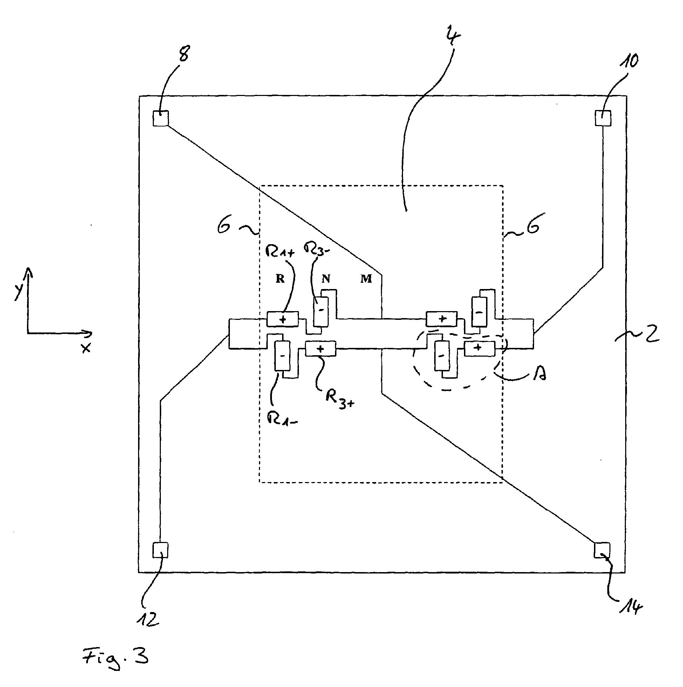

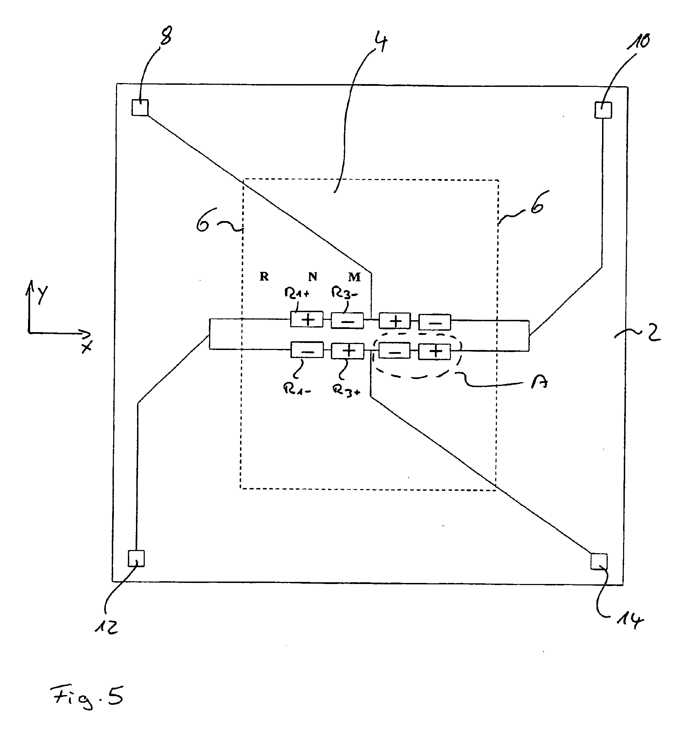

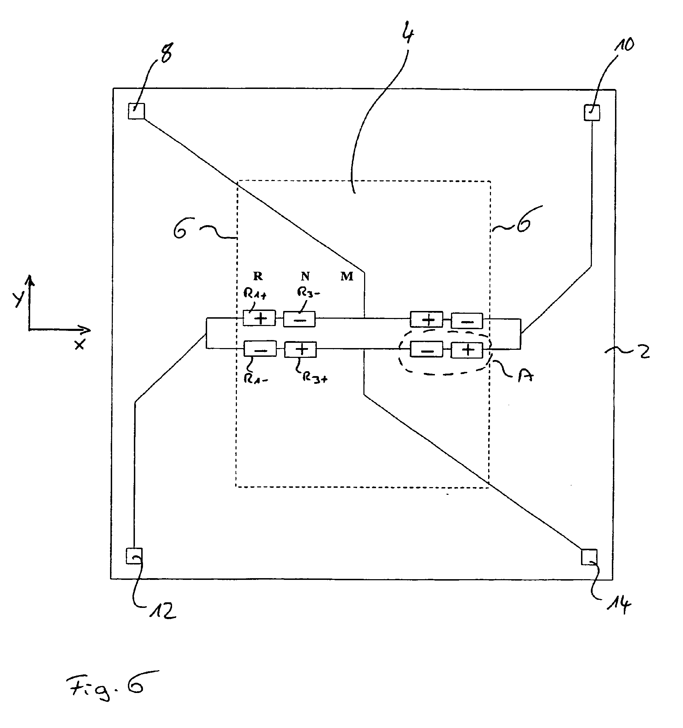

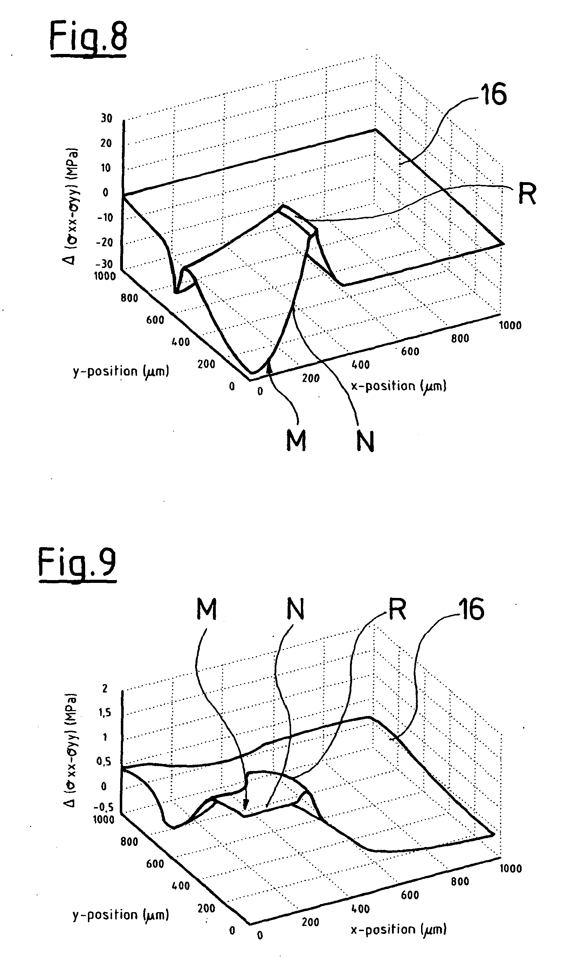

Ferner zeigen die Fig. 1 bis 6 drei verschiedene Anordnungen der Messwiderstände R₁ und R₃ entlang der Achse x. Bei den Ausführungsbeispielen gemäß Fig. 1 und 4 sind die äußeren Messwiderstände R₁ direkt am Randbereich der R der Membran 4 angeordnet, während die Messwiderstände R₃ im Mittelbereich bzw. Zentralbereich M angeordnet sind. Bei der Ausführungsform gemäß Fig. 2 und 5 sind die äußeren Messwiderstände R₁ in einem Neutralbereich N angeordnet, welcher in Richtung der Achse X zwischen dem Randbereich R und dem Mittelbereich M der Membran 4 gelegen ist. Bei der dritten Anordnungsmöglichkeit gemäß Fig. 3 und 6 sind die äußeren Messwiderstände R₁ im Randbereich R und die inneren Messwiderstände R₃ im Neutralbereich N der Membran 4 angeordnet. Das aus diesen Anordnungen der Messwiderstände R₁ und R₃ resultierende Messprinzip wird später anhand der Fig. 8 bis 13 erläutert.

Bei den Ausführungsbeispielen gemäß Fig. 1 bis 6 sind die vier Messwiderstände R₁ und die vier Messwiderstände R₃ in einer gemeinsamen Brückenschaltung gemäß Fig. 7 miteinander verschaltet. Entsprechend sind auf dem Substrat vier elektrische Anschlüsse 8, 10, 12 und 14 angeordnet. Wie durch die in Fig. 1 bis 6 angedeuteten Leiterbahnen sowie die Schaltung in Fig. 7 dargestellt ist, sind die acht Messwiderstände R₁ und R₃ so in einer Wheatstone-Brückenschaltung verschaltet, dass in jedem der vier Zweige A, B, C und D ein Messelement R₁, welches näher zum Randbereich der Membran 4 angeordnet ist, und ein Messelement R₃, welches näher zum Zentral- bzw. Mittelbereich der Membran 4 hin angeordnet ist, miteinander verschaltet sind. Die Messelemente R₁ und R₃ in den Zeigen A, B, C, D der Brückenschaltung sind jeweils in Reihe geschaltet. Wir vorangehend erläutert, sind ferner in jedem Zweig A, B, C, D der Brückenschaltung jeweils ein Messwiderstand R₁₊ oder R₃₊ mit einem positiven Ausgangssignal und ein Messwiderstand R₁₋ oder R₃₋ mit einem negativen Ausgangssignal in Reihe geschaltet angeordnet, so dass die Ausgangssignale der beiden im selben Zweig der Brückenschaltung angeordneten Messwiderstände aufgrund der unterschiedlichen Vorzeichen subtrahiert werden. Wenn in dieser Beschreibung von Ausgangssignalen der Messwiderstände gesprochen wird, handelt es sich hierbei eigentlich um die aufgrund der Spannungs- bzw. Dehnungsänderungen auftretenden Widerstandsänderungen, welche bei den Widerständen R₁₋ und R₃₋ negativ und bei den Messwiderständen R₁₊ und R₃₊ positiv sind. Der Zweig A ist beispielhaft durch die gestrichelte Umrandung auch in Fig. 1 bis 6 dargestellt. I Im Zweig A sind ein Messwiderstand R₁₊ mit positiven Ausgangssignal, welcher näher zum Rand der Membran gelegen ist, und ein Messwiderstand R₃- mit negativen Ausgangssignal, welcher näher zur Mitte der Membran 4 gelegen ist, angeordnet. Die auf der Membran punktsymmetrisch zu deren Mitteilpunkt gegenüberliegenden Messwiderstände R₁₊ und R₃₋ sind entsprechend im Zweig C der Brückenschaltung angeordnet. Die Widerstände R₃₊ und R₁₋ sind in gleicher Weise jeweils in den Zweigen B und D der Brückenschaltung angeordnet.

An die elektrischen Anschlüsse 10 und 12 wird ein Messstrom Iₛ angelegt. Eine dem auf die beiden Membranoberflächen wirkenden Differenzdruck proportionale Ausgangsspannung Vₒᵤₜ kann zwischen den elektrischen Anschlüssen 8 und 14 abgegriffen werden. Durch die erfindungsgemäße Anordnung der Messelemente bzw. Messwiderstände R₁ und R₃ in der in Fig. 7 gezeigten Brückenschaltung wird bei der Differenzdruckbestimmung aufgrund der Auslenkung der Membran der auf beide Membranseiten und am Umfang der Membran 4 auf das Substrat 2 wirkende Systemdruck berücksichtigt und dessen Einfluss entsprechend kompensiert, so dass das Ausgangssignal Vₒᵤₜ bereits um den Systemdruckeinfluss bereinigt ist.

Diese Kompensation beruht auf einem anhand der Figuren 8 und 9 erläuterten Prinzip. Figuren 8 und 9 zeigen Spannungsdiagramme, in welchen die Änderung der Gesamtspannung Δ (σₓₓ -σ_{yy}) gegenüber den Achsrichtungen x und y der Membran 4 aufgetragen ist. Die gezeigten Diagramme zeigen dabei jeweils ein Viertel der Membran 4, d.h. die auf den Diagrammachsen aufgetragenen x- und y-Koordinaten zählen vom Membranmittelpunkt aus. Fig. 8 zeigt die Spannungen bzw. Spannungsänderungen, welche durch den auf die Membran 4 zwischen beiden Oberflächen wirkenden Differenzdruck verursacht werden. Dabei ist zu erkennen, dass die Spannungen bzw. Spannungsänderungen aufgrund des Differenzdruckes im Bereich des Randes R ein umgekehrtes Vorzeichen zu den Spannungsänderungen im Zentral- bzw. Mittelbereich M der Membran aufweisen. Im Neutralbereich N, welcher zwischen dem Randbereich R und dem Mittelbereich M der Membran (siehe Fig. 1 bis 6) gelegen ist, tritt aufgrund des Differenzdruckes bzw. aufgrund von Änderungen des Differenzdruckes keine Spannungsänderung auf. In diesem Punkt liegt der Nulldurchgang der Kurve zwischen dem Randbereich R und dem Mittelbereich M. Die Amplitude in den Bereichen R und M ist im Wesentlichen gleich. Im Randbereich R der Membran 4 sind, wie in Fig. 1 gezeigt, die Messwiderstände R₁ angeordnet, während im Mittelbereich M die Messwiderstände R₃ angeordnet sind.

Der Absolut- bzw. Ausgangs- bzw. Systemdruck, welcher auf beide Seiten bzw. Oberflächen der Membran 4 in gleicher Weise und auf die Stirnkanten des Trägers am Umfang der Membran wirkt, erzeugt Spannungsänderungen in der Membran, welche einen Verlauf haben, wie er in dem Diagramm gemäß Fig. 9 dargestellt ist. Hier ist zu erkennen, dass die Spannungsänderungen im Randbereich R im Neutralbereich N und im Mittelbereich M der Membran 4 die im Wesentlichen gleiche Amplitude und das gleiche Vorzeichen haben. Die Spannungsänderungen aufgrund des Systemdruckes haben im Mittelbereich M der Membran, in welchem die Messwiderstände R₃ angeordnet sind, somit ein anderes Vorzeichen als die aufgrund des Systemdruckes in diesem Bereich M verursachten Spannungsänderungen. Diese unterschiedlichen Vorzeichen der Spannungsänderungen werden in der anhand der Figuren 1 bis 7 erläuterten Schaltung der Messwiderstände R₁ und R₃ dazu genutzt, den Einfluss des Systemdruckes auf das Messergebnis des Differenzdruckes zu kompensieren.

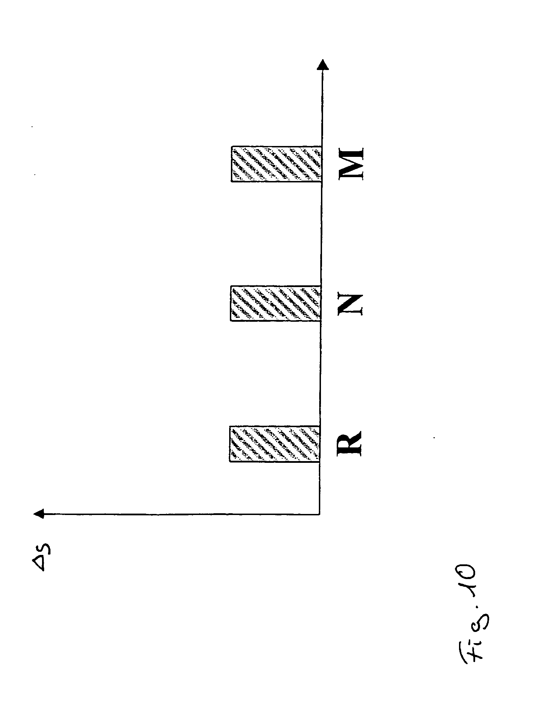

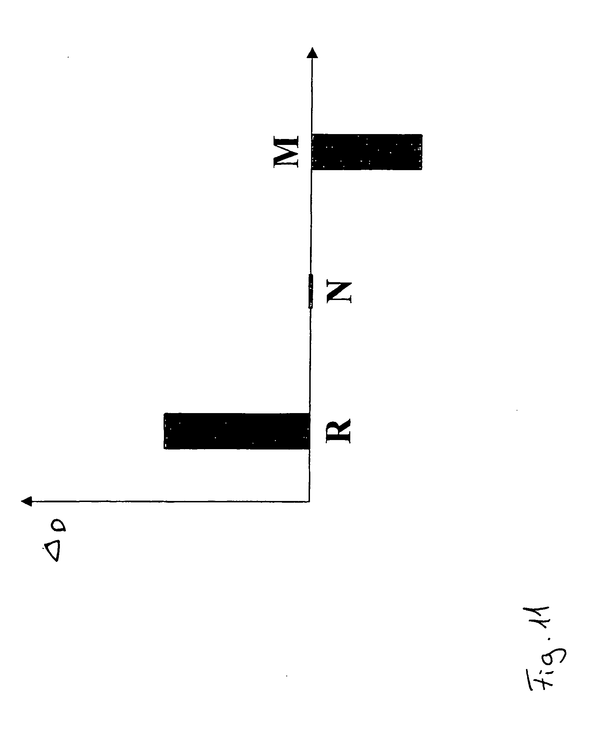

Das Kompensationsprinzip wird nun näher anhand der Fig. 10 bis 13 erläutert. Fig. 10 zeigt die Spannungsänderungen Δ_{S} an dem Randbereich R, im Neutralbereich N und im Mittelbereich M der Membran 4 aufgrund des Systemsdruckeinflusses, wie anhand von Fig. 9 beschrieben. In der schematischen Darstellung gemäß Fig. 10 ist noch einmal zu erkennen, dass die Spannungsänderungen Δ_{S} in den drei Bereichen R, N und M der Membran 4 im Wesentlichen dieselbe Amplitude und dasselbe Vorzeichen haben. Fig. 11 zeigt entsprechend in einer schematischen Darstellung die Spannungsänderungen Δ_{D} im Randbereich R, im Neutralbereich N und im Mittelbereich M der Membran 4, welche durch den auf die Membran 4 wirkenden Differenzdruck verursacht werden. Wie anhand von Fig. 8 erläutert, weisen die Spannungsänderungen aufgrund des Differenzdruckes im Randbereich R und im Mittelbereich M entgegengesetzte Vorzeichen auf, während im Neutralbereich N aufgrund des Differenzdruckes keine Spannungsänderungen auftreten.

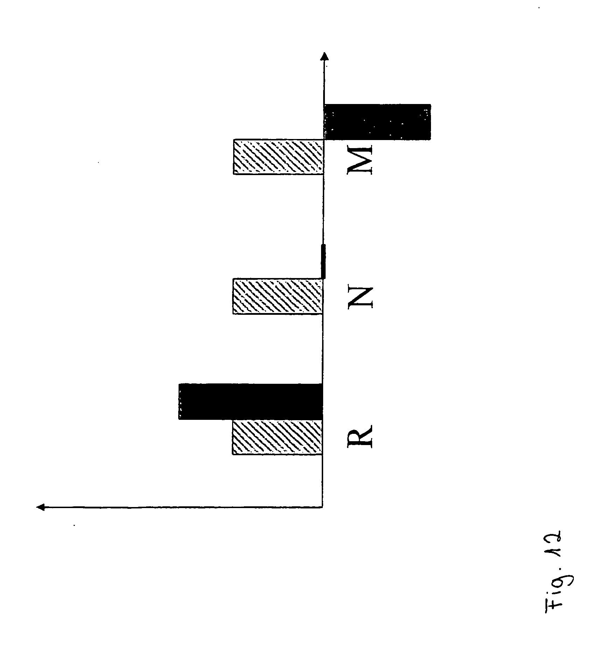

In dem Diagramm gemäß Fig. 12 sind nun die Spannungsänderungen Δ_{D} und Δ_{S} gemäß Fig. 10 und 11 in einem gemeinsamen Diagramm dargestellt, in welchem zu erkennen ist, dass die Spannungsänderungen Δ_{S} und Δ_{D} im Mittelbereich M der Membran 4 unterschiedliche Vorzeichen aufweisen, während sie im Randbereich R der Membran 4 gleiche Vorzeichen aufweisen. Wenn die Differenzdruckbeaufschlagung umgekehrt auf die Membran 4 wirken würde, wäre dies genau umgekehrt, d. h. Δ_{S} und Δ_{D} würden im Randbereich R unterschiedliche Vorzeichen und im Mittelbereich M gleiche Vorzeichen aufweisen.

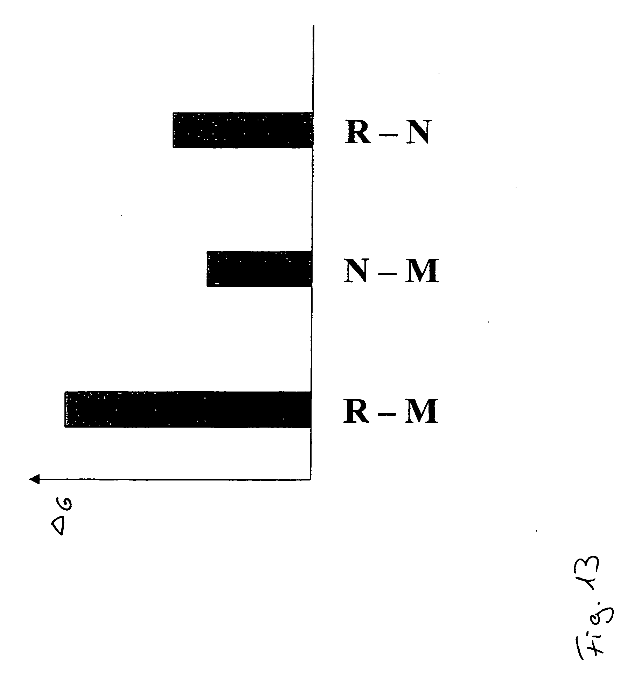

In Fig. 13 ist schematisch die Signaländerung Δ_{G} dargestellt, welche sich durch Subtraktion der Spannungsänderungen im Randbereich R, im Mittelbereich M und/oder Neutralbereich N der Membran 4 ergibt, wie sie in der vorangehend beschriebenen Wheatstone-Brückenschaltung in einem Zweig vorgenommen wird. Für den Fall, dass die Messwiderstände R₁ im Randbereich R und die Messwiderstände R₃ im Mittelbereich M der Membran 4 angeordnet sind (gemäß Fig. 1 und Fig. 4), ist im linken Balken in Fig. 13 zu erkennen, dass es bei Subtraktion der Spannungsänderungen Δ_{S} und Δ_{D} aufgrund des unterschiedlichen Vorzeichens der Spannungen Δ_{D} im Randbereich R und Mittelbereich M zu einer Addition der Beträge der Spannungsänderungen Δ_{D} in dem Randbereich R und im Mittelbereich M kommt, während sich der Einfluss des Systemdruckes Δ_{S} aufgrund der gleichen Amplitude und dem gleichen Vorzeichen im Randbereich R und im Mittelbereich M aufhebt.

Wenn die Messwiderstände R₁ im Neutralbereich N und die Messwiderstände R₃ im Mittelbereich M angeordnet sind (gemäß Fig. 2 und Fig. 5), kommt es bei Substraktion der Signale zu der Signaländerung Δ_{G}, welche durch den mittleren Balken in Fig. 13 dargestellt ist. Auch hier wird der Einfluss des Systemdruckes Δ_{S} durch die Subtraktion eliminiert und Δ_{D} entspricht dem Betrag der Spannungsänderung Δ_{S} im Mittelbereich M, da die Spannungsänderung Δ_{D} im Neutralbereich null ist.

Wenn die Messwiderstände R₁ im Randbereich R und die Messwiderstände R₃ im Neutralbereich N der Membran 4 angeordnet sind (gemäß Fig. 3 und Fig. 6), ergibt sich die Signaländerung Δ_{G}, welche im rechten Balken in Fig. 13 dargestellt ist, wenn die Signale Δ_{D} und Δ_{S} im Neutralbereich von denen im Randbereich subtrahiert werden. Aufgrund des gleichen Vorzeichens und der gleichen Amplitude der Spannungsänderungen Δ_{S}, wird deren Einfluss eliminiert und Δ_{G} entspricht der Signaländerung aufgrund des Differenzdruckes Δ_{D} im Randbereich R. Auf diese Weise kann durch Verschaltung der Messwiderstände _{R1} und R₃ der Einfluss des Systemsdruckes Δ_{S} eliminiert bzw. kompensiert werden. Die Subtraktion der Spannungsänderungen Δ_{S} und Δ_{D} in den einzelnen Bereichen der Membran voneinander erfolgt dadurch, dass, wie zuvor beschrieben, die Messwiderstände R₁ und R₃ paarweise Ausgangssignale mit unterschiedlichen Vorzeichen aufweisen und in der Wheatstone-Brückenschaltung gemäß Fig.7 miteinander verschaltet sind.

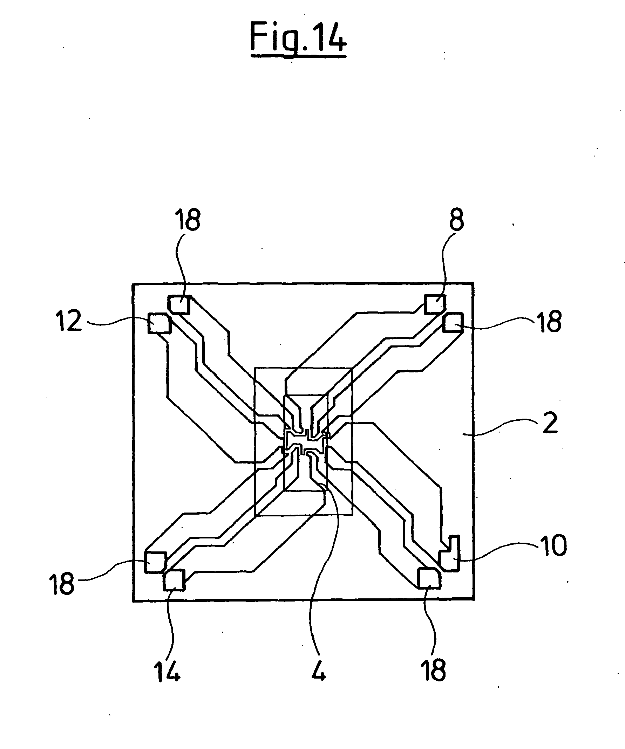

Fig. 14 zeigt eine besondere Ausführungsform der Erfindung, bei welche die Widerstände R₁ und R₃ entsprechend der in Figuren 1 und 6 erläuterten Ausführungsform verschaltet sind. Zusätzlich zu den elektrischen Anschlüssen 8, 10, 12 und 14 sind bei der Ausführungsform gemäß Fig. 14 vier weitere Anschlüsse 18 vorgesehen, welche jeweils zwischen den Widerständen R₁₋ und R₃₊ bzw. R₃₋ und R₁₊ in den Zweigen A, B, C und D der Messbrücke gemäß Figuren 1 und 6 angreifen. Diese elektrischen Anschlüsse 18 können dazu verwendet werden, zusätzlich zu dem über die elektrischen Anschlüsse 8, 10, 12, 14 erfassten kompensierten Differenzdruck auch den wirkenden Systemdruck als einzelne Größe zu erfassen.

Im gezeigten Beispiel ist die Membran 4 länglich und rechteckig ausgebildet. Alternativ kann die Membran 4 auch so ausgebildet sein, dass sie beispielsweise elliptisch ausgebildet ist, wobei die Langachse sich in der Richtung y und die kurze Achse der Ellipse in Richtung der Achse x erstreckt. Ferner ist es auch möglich, die Membran auf andere Weise, beispielsweise durch unterschiedliche Dicken so auszubilden, dass die bei Verformung auftretenden Spannungen in Richtung der Achse x größer als in Richtung der Achse Y sind. Für den Fall, dass Messwiderstände bzw. Messelemente R₁ und R₃ verwendet werden, welche in der Lage sind, lediglich die Spannungen in Richtungen der Achse x zu erfassen, kann die Membran auch so ausgebildet sein, dass die bei Druckbeaufschlagung auftretenden Spannungen bzw. Spannungsänderungen in Richtung der Achsen x und y gleich groß sind, d.h. es kann beispielsweise auch eine quadratische oder runde Membran verwendet werden.

### Bezugszeichenliste

- 2: - Träger
- 4: - Membran
- 6: - Langseiten
- 8, 10, 12, 14: - elektrische Anschlüsse
- 16: - Spannungsspitzen
- 18: - Elektrische Anschlüsse

- A, B, C, D: - Zweige der Brückenschaltung
- Iₛ: - Messstrom
- Vₒᵤₜ: - Ausgangsspannung
- R₁₊, R₁₋: - Messwiderstände, welche im Randbereich der Membran 4 angeordnet sind
- R_{3+-,t}, R₃₋: - Messwiderstände, welche im Zentralbereich der Membran 4 angeordnet sind

- x, y: - Membranachsen
- M: Mittelbereich der Membran
- N: Neutralbereich der Membran
- R: Randbereich der Membran
- Δ_{S}: Spannungsänderung durch Systemdruck
- Δ_{D}: Spannungsänderung durch Differenzdruck
- Δ_{G}: Signaländerung

## Patentansprüche

1. Drucksensor mit einem Träger (2), welcher in einem inneren Bereich eine Membran (4) aufweist, an welcher zumindest ein erstes Messelement (R₁₋) zum Erfassen einer Druckbeaufschlagung der Membran (4) angeordnet ist, **dadurch gekennzeichnet, dass** an der Membran zusätzlich zumindest ein zweites Messelement (R₃₋) zum Erfassen einer Druckbeaufschlagung der Membran (4) angeordnet ist, wobei das erste Messelement (R₁₋) und das zweite Messelement (R₃₋) vom Rand der Membran unterschiedlich weit beabstandet angeordnet sind und wobei der Drucksensor derart ausgebildet ist, dass die Ausgangssignale des ersten und zweiten Messelementes (R₁₋, R₃₋) zusammen derart ausgewertet werden, dass die beiden Messelemente (R₁₋, R₃₋) einen auf die Membran (4) wirkenden Differenzdruck erfassen und dabei den Einfluss des auf beide Seiten der Membran (4) wirkenden Systemdrucks kompensieren.

2. Drucksensor nach Anspruch 1, **dadurch gekennzeichnet, dass** das zumindest eine erste Messelement (R₁₋) in einem Randbereich (R) der Membran (4) und dass das zumindest eine zweite Messelement (R₃₋) in einem Zentralbereich (M) oder in einem zwischen dem Randbereich (R) und dem Zentralbereich (M) gelegenen Neutralbereich (N) der Membran (4) angeordnet ist.

3. Drucksensor nach Anspruch 1, **dadurch gekennzeichnet, dass** das zumindest eine zweite Messelement (R₃₋) in einem Zentralbereich (M) der Membran (4) und dass das zumindest eine erste Messelement (R₁₋) in einem Randbereich (R) oder in einem zwischen dem Randbereich (R) und dem Zentralbereich (M) gelegenen Neutralbereich (N) der Membran (4) angeordnet ist.

4. Drucksensor nach einem der Ansprüche 1 bis 3, **dadurch gekennzeichnet, dass** jeweils vier erste Messelemente (R₁₋, R₁₊) und vier zweite Messelemente (R₃₋, R₃₊) an der Membran (4) angeordnet sind, welche in einer Brückenschaltung miteinander verschaltet sind.

5. Drucksensor nach Anspruch 4, **dadurch gekennzeichnet, dass** die vier ersten (R_{1,-} R₁₊) und die vier zweiten Messelemente (R₃₋, R₃₊) jeweils so ausgebildet oder angeordnet sind, dass zwei (R₁₋, R₃₊) von ihnen ein Ausgangssignal mit positivem Vorzeichen und zwei von ihnen ein Ausgangssignal mit negativem Vorzeichen haben.

6. Drucksensor nach einem der vorangehenden Ansprüche, **dadurch gekennzeichnet, dass** die Membran (2) entlang einer ersten Achse (x) ein anderes Verformungsverhalten bei Druckbeaufschlagung aufweist als entlang einer sich normal zu der ersten Achse (x) erstreckenden zweiten Achse (y).

7. Drucksensor nach Anspruch 6, **dadurch gekennzeichnet, dass** die Membran (4) in Richtung der zweiten Achse (y) eine größere Länge aufweist als in Richtung der ersten Achse (x).

8. Drucksensor nach Anspruch 7, **dadurch gekennzeichnet, dass** das Verhältnis der Längen der Membran in Richtung der zweiten Achse (y) und in Richtung der ersten Achse (x) zwischen 1,2 und 4, vorzugsweise bei 2,5 liegt.

9. Drucksensor nach Anspruch 7 oder 8, **dadurch gekennzeichnet, dass** die ersten und zweiten Messelemente (R₁₋, R₁₊) in Richtung der zweiten Achse (y) gesehen im Mittelbereich der Membran (4) angeordnet sind.

10. Drucksensor nach einem der Ansprüche 7 bis 9, **dadurch gekennzeichnet, dass** die Membran (4) rechteckig ausgebildet ist.

11. Drucksensor nach einem der vorangehenden Ansprüche, **dadurch gekennzeichnet, dass** die ersten (R₁₋, R₁₊) und zweiten (R₃₋, R₃₊) Messelemente in einer gemeinsamen Brückenschaltung miteinander verschaltet sind.

12. Drucksensor nach Anspruch 11, **dadurch gekennzeichnet, dass** die ersten (R₁₋, R₁₊) und zweiten (R₃₋, R₃₊) Messelemente in einer Wheatstone-Brückenschaltung miteinander verschaltet sind, wobei in jedem Zweig (A, B, C, D) der Brückenschaltung jeweils eines der ersten (R₁₋, R₁₊) und eines (R₃₋, R₃₊) der zweiten Messelemente in Reihe geschaltet angeordnet sind.

13. Drucksensor nach Anspruch 12, **dadurch gekennzeichnet, dass** in jedem Zweig (A, B, C, D) der Brückenschaltung zwei Messelemente in Reihe geschaltet sind, welche Ausgangssignale mit unterschiedlichen Vorzeichen haben.

14. Drucksensor nach einem der vorangehenden Ansprüche, **dadurch gekennzeichnet, dass** die Messelemente (R₁, R₃) in jeweils einem Bereich der Membran (4) angeordnet sind, in welchem bei Druckbeaufschlagung die größte Verformung auftritt.

15. Drucksensor nach einem der vorangehenden Ansprüche, **dadurch gekennzeichnet, dass** die Membran (4) unterschiedlich dick ausgebildet ist, um unterschiedliche Verformungsverhalten in den Richtungen der beiden Achsen (x, y) aufzuweisen.

## Claims

1. A pressure sensor with a carrier (2), which in an inner region comprises a membrane (4), on which at least one first measurement element (R₁₋) for detecting a pressure impingement of the membrane (4) is arranged, **characterised in that** additionally at least one second measurement element (R₃₋) for detecting a pressure impingement of the membrane (4) is arranged on the membrane, wherein the first measurement element (R₁₋) and the second measurement element (R₃-) are arranged distanced differently far from the edge of the membrane and wherein the pressure sensor is designed in a manner such that the output signals of the first and the second measurement element (R₁₋, R₃₋) are evaluated together in a manner such that the two measurement elements (R₁₋, R₃₋) detect a differential pressure acting on the membrane (4) and thereby compensate influence of the system pressure acting on both sides of the membrane (4).

2. A pressure sensor according to claim 1, **characterised in that** the at least one first measurement element (R₁₋) is arranged in an edge region (R) of the membrane (4) and that the at least one second measurement element (R₃₋) is arranged in a central region (M) or in a neutral region (N) of the membrane (4), which is situated between the edge region (R) and the central region (M).

3. A pressure sensor according to claim 1, **characterised in that** the at least one second measurement element (R₃₋) is arranged in a central region (M) of the membrane (4) and that the at least the one first measurement element (R₁₋) is arranged in an edge region (R) or in a neutral region (N) of the membrane (4), which is situated between the edge region (R) and the central region (M).

4. A pressure sensor according to one of the claims 1 to 3, **characterised in that** in each case four first measurement elements (R₁₋, R₁₊) and four second measurement elements (R₃₋, R₃₊) are arranged on the membrane (4), and are connected to one another into a bridge circuit.

5. A pressure sensor according to claim 4, **characterised in that** the four first (R1-, R1+) and the four second measurement elements (R₃₋, R₃₊) are in each case designed or arranged such that two (R₁₋, R₃₊) of them have an output signal with a positive polarity and two of them have an output signal with a negative polarity.

6. A pressure sensor according to one of the preceding claims, **characterised in that** the membrane (2) along a first axis (x) has a different deformation behavior on pressure impingement than along a second axis (y) extending normally to the first axis (x).

7. A pressure sensor according to claim 6, **characterised in that** the membrane (4) in the direction of the second axis (y) has a greater length than in the direction of the first axis (x).

8. A pressure sensor according to claim 7, **characterised in that** the ratio of the lengths of the membrane in the direction of the second axis (y) and in the direction of the first axis (x) lies between 1.2 and 4, preferably at 2.5.

9. A pressure sensor according to claim 7 or 8, **characterised in that** the first and second measurement elements (R₁₋, R₁₊), seen in the direction of the second axis (y), are arranged in the middle region of the membrane (4).

10. A pressure sensor according to one of the claims 7 to 9, **characterised in that** the membrane (4) is designed in a rectangular manner.

11. A pressure sensor according to one of the preceding claims, **characterised in that** the first (R₁₋, R₁₊) and the second (R₃₋, R₃₊) measurement elements are connected to one another into a common bridge circuit.

12. A pressure sensor according to claim 11, **characterised in that** the first (R₁₋, R₁₊) and the second (R₃₋, R₃₊) measurement elements are connected to one another into a Wheatstone bridge circuit, wherein in each case one of the first (R₁₋, R₁₊) and one of the second (R₃-, R₃₊) measurement elements are arranged connected in series in each branch (A, B, C, D) of the bridge circuit.

13. A pressure sensor according to claim 12, **characterised in that** two measurement elements which have output signals with a different polarity are connected in series in each branch (A, B, C, D) of the bridge circuit.

14. A pressure sensor according to one of the preceding claims, **characterised in that** the measurement elements (R₁, R₃,) are arranged in each case in a region of the membrane (4), in which the greatest deformation occurs on pressure impingement.

15. A pressure sensor according to one of the preceding claims, **characterised in that** the membrane (4) is designed differently thick, in order to have different deformation behavior in the directions of the two axes (x, y).

## Revendications

1. Capteur de pression comprenant un support (2) qui présente, dans une région intérieure, une membrane (4) sur laquelle est disposé au moins un premier élément de mesure (R₁₋) pour détecter une sollicitation en pression de la membrane (4), **caractérisé en ce qu'**est disposé en outre sur la membrane au moins un deuxième élément de mesure (R₃₋) pour détecter une sollicitation en pression de la membrane (4), le premier élément de mesure (R₁₋) et le deuxième élément de mesure (R₃₋) étant situés à des distances différentes du bord de la membrane et le capteur de pression étant réalisé de façon telle que les signaux de sortie du premier et du deuxième éléments de mesure (R₁₋, R₃₋) sont évalués conjointement de sorte que les deux éléments de mesure (R₁₋, R₃₋) détectent une pression différentielle agissant sur la membrane (4) et compensent ainsi l'influence de la pression de système qui agit des deux côtés de la membrane (4).

2. Capteur de pression selon la revendication 1, **caractérisé en ce que** le premier élément de mesure (R₁₋), au moins au nombre de un, est situé dans une zone de bordure (R) de la membrane (4) et **en ce que** le deuxième élément de mesure (R₃₋), au moins au nombre de un, est disposé dans une zone centrale (M) ou dans une zone neutre (N) de la membrane (4), située entre la zone de bordure (R) et la zone centrale (M).

3. Capteur de pression selon la revendication 1, **caractérisé en ce que** le deuxième élément de mesure (R₃₋), au moins au nombre de un, est situé dans une zone centrale (M) de la membrane (4) et **en ce que** le premier élément de mesure (R₁₋), au moins au nombre de un, est disposé dans une zone de bordure (R) ou dans une zone neutre (N) de la membrane (4), située entre la zone de bordure (R) et la zone centrale (M),.

4. Capteur de pression selon l'une des revendications 1 à 3, **caractérisé en ce que** sont disposés respectivement sur la membrane (4) quatre premiers éléments de mesure (R₁₋, R₁₊) et quatre deuxièmes éléments de mesure (R₃₋, R₃₊) qui sont connectés entre eux en un circuit en pont.

5. Capteur de pression selon la revendication 4, **caractérisé en ce que** les quatre premiers (R₁₋, R₁₊) et les quatre deuxièmes éléments de mesure (R₃₋, R₃₊) sont respectivement conçus ou disposés de façon telle que deux (R₁₋, R₃₊) d'entre eux ont un signal de sortie de signe positif et deux d'entre eux ont un signal de sortie de signe négatif.

6. Capteur de pression selon l'une des revendications précédentes, **caractérisé en ce que** la membrane (2) présente, le long d'un premier axe (x), un comportement de déformation en cas de sollicitation en pression qui est différent du comportement de déformation le long d'un deuxième axe (y) s'étendant perpendiculairement au premier axe (x).

7. Capteur de pression selon la revendication 6, **caractérisé en ce que** la membrane (4) présente une plus grande longueur dans la direction du deuxième axe (y) que dans la direction du premier axe (x).

8. Capteur de pression selon la revendication 7, **caractérisé en ce que** le rapport des longueurs de la membrane en direction du deuxième axe (y) et en direction du premier axe (x) se situe entre 1, 2 et 4, et est de préférence égal à 2,5.

9. Capteur de pression selon la revendication 7 ou 8, **caractérisé en ce que** les premiers et deuxièmes éléments de mesure (R₁₋, R₁₊), vus dans la direction du deuxième axe (y), sont disposés dans la zone centrale de la membrane (4).

10. Capteur de pression selon l'une des revendications 7 à 9, **caractérisé en ce que** la membrane (4) est de forme rectangulaire.

11. Capteur de pression selon l'une des revendications précédentes, **caractérisé en ce que** les premiers (R₁₋, R₁₋₊) et deuxièmes (R₃₋, R₃₊) éléments de mesure sont connectés entre eux en un circuit en pont commun.

12. Capteur de pression selon la revendication 11, **caractérisé en ce que** les premiers (R₁₋, R₁₊) et deuxièmes (R₃₋, R₃₊) éléments de mesure sont connectés entre eux en un circuit en pont de Wheatstone, l'un des premiers (R₁₋, R₁₊) et l'un (R₃₋, R₃₊) des deuxièmes éléments de mesure étant respectivement montés en série dans chaque branche (A, B, C, D) du circuit en pont.

13. Capteur de pression selon la revendication 12, **caractérisé en ce que**, dans chaque branche (A, B, C, D) du circuit en pont, sont montés en série deux éléments de mesure dont les signaux de sortie sont de signes différents.

14. Capteur de pression selon l'une des revendications précédentes, **caractérisé en ce que** les éléments de mesure (R₁, R₃) sont disposés respectivement dans une zone de la membrane (4) dans laquelle s'opère la déformation la plus importante en cas de sollicitation en pression.

15. Capteur de pression selon l'une des revendications précédentes, **caractérisé en ce que** la membrane (4) est réalisée avec des épaisseurs différentes pour présenter des comportements de déformation différents dans les directions des deux axes (x, y).
